# EUROPÄISCHE PATENTANMELDUNG

(11) **EP 0 667 113 A1**
(43) Veröffentlichungstag der Anmeldung: **16.08.1995**
(21) Anmeldenummer: 95100106.4
(22) Anmeldetag: 05.01.1995
(51) Int. Cl.: A47J 45/06

(54) **Griff aus Edelstahl zur Befestigung an Wandungsteilen von Kochgeschirren, Möbelteilen oder anderen Gebrauchsgegenständen**

(30) Priorität: 12.02.1994 DE 9402348 U; 31.03.1994 DE 4411274; 24.12.1994 DE 4446561
(71) Anmelder: Gebr. Dingerkus, D-57439 Attendorn (DE)
(72) Erfinder: Schulte, Norbert, Dipl.-Ing., D-57439 Attendorn-Niederhelden (DE)
(74) Vertreter: Köchling, Conrad-Joachim

(57) **Zusammenfassung**

Um einen Griff aus Edelstahl zur Schweißbefestigung an der Wandung von Koch- oder Bratgeschirren oder deren Deckeln oder anderen Gebrauchsgegenständen, die insbesondere aus Edelstahl bestehen, oder zur Schweißbefestigung an Zwischenplatten oder dergleichen Zwischenelementen aus Edelstahl, die an Koch- oder Bratgeschirren oder deren Deckeln oder anderen Gebrauchsgegenständen befestigbar sind zu schaffen, der bei einfacher Fertigung eine sehr stabile Anordnung an den entsprechenden Wandungsfläche ermöglicht, wobei insbesondere bei Kochgeschirr eine Erwärmung des Griffbereiches noch zunehmend unterbunden ist und wobei eine besonders einfach und rationelle Anschweißung an der Wandung oder an Zwischenelementen erfolgen kann, wird vorgeschlagen, daß der Griff (3) im Bereich der Anschweißstelle (9) eine gerundete Außenkontur aufweist, mit der Rundung an die Geschirrwandung, Deckelwandung, Zwischenplatten- oder Zwischenelementwandung oder Gegenstandswandung angelegt und im Kontaktbereich an diese angeschweißt ist.

## Beschreibung

Die Erfindung betrifft einen Griff aus Edelstahl zur Schweißbefestigung an der Wandung von Koch- oder Bratgeschirren oder deren Deckeln oder anderen Gebrauchsgegenständen, die vorzugsweise aus Edelstahl bestehen, oder zur Schweißbefestigung an Zwischenplatten oder dergleichen Zwischenelementen aus Edelstahl, die an Koch oder Bratgeschirren oder deren Deckeln oder anderen Gebrauchsgegenständen befestigbar sind.

Derartige Griffe sind im Stand der Technik bekannt. Üblicherweise werden solche Griffe aus Stabmaterial aus Edelstahl zu einer Bügelform gebogen oder zu einer Stielform geschlauft. Dabei sind die Griffe jeweils einstückig aus Edelstahl geformt. Die Griffe können beispielsweise an der Wandung von Koch- oder Bratgeschirren oder auch an Deckeln aus Edelstahl angeschweißt werden. Sie können auch an Zwischenelementen in Form von Zwischenelementen oder dergleichen angeschweißt werden, wobei das Zwischenelement dann an Geschirrwandungen (auch Edelstahl) befestigt werden, beispielsweise verschraubt werden kann.

Trotz der Ausbildung aus Edelstahl (schlecht wärmeleitendes Material) erwärmen sich derartige Griffe bei der Benutzung von damit ausgerüstetem Kochgeschirr erheblich, so daß für den Benutzer unzumutbare Temperaturen im Griffbereich entstehen. Desweiteren ist das Anschweißen von solchen Griffen aus Edelstahl an entsprechenden Wandungsteilen oder Zwischenteilen aus Edelstahl aufwendig, da häufig Zwischenelemente zum Zwecke der Verschweißung eingesetzt werden müssen und/oder eine aufwendige Anpassung der Form der Griffenden an die gewölbte Geschirrwandung oder den Deckel erfolgen muß.

Es sind auch Griffausbildungen bekannt, bei denen aus Edelstahl bestehende Griffe an anderen Gebrauchsgegenständen, wie Türen, Klappen oder dergleichen befestigt sind. Auch bei einer solchen Ausbildung ist eine einfache und dauerhafte Befestigung erwünscht.

Ausgehend von diesem Stand der Technik liegt der Erfindung die Aufgabe zugrunde, einen Griff gattungsgemäßer Art zu schaffen, der bei einfacher Fertigung eine sehr stabile Anordnung an den entsprechenden Wandungsflächen ermöglicht, wobei insbesondere bei Kochgeschirr eine Erwärmung des Griffbereiches noch zunehmend unterbunden ist und wobei eine besonders einfach und rationelle Anschweißung an der Wandung oder an Zwischenelementen erfolgen kann.

Zur Lösung dieser Aufgabe schlägt die Erfindung vor, daß der Griff im Bereich der Anschweißstelle eine gerundete Außenkontur aufweist, mit der Rundung an die Geschirrwandung, Deckelwandung oder Zwischenelementwandung oder Gegenstandswandung angelegt und im Kontaktbereich an diese angeschweißt ist.

Der Erfindung liegt die Erkenntnis zugrunde, daß dann, wenn der Griff im Bereich der Anschweißstelle eine gerundete Außenkontur aufweist, ein Anschweißen an die üblicherweise ebenfalls gerundete Wandung des Geschirrs, des Deckels oder des Zwischenelementes in einfacher Weise möglich ist, wobei durch die konvexe Wölbung der beiden Berührungsflächen im Schweißbereich ein äußerst enger konzentrierter Kontaktpunkt erzeugt wird, der das Anschweißen erheblich erleichtert. Bei der erfindungsgemäßen Ausbildung ist eine sehr einfache Fertigung der entsprechenden gerundeten Außenkonturen im Anschweißbereich möglich. Insbesondere sind keine konkaven, der Geschirrwandung, Deckelwandung der Zwischenelementwandung oder der sonstigen Gebrauchsgegenstandswandung angepaßten Anschweißbereiche auszubilden, es ist lediglich erforderlich, den Anschweißbereich mit einem Radius auszustatten, so daß eine konvex gewölbte Zone oder Fläche entsteht.

Durch die erfindungsgemäße Ausbildung wird zudem ein geringerer Temperaturübergang im Schweißbereich erreicht, so daß der Griff sich bei der Benutzung eines entsprechend ausgestatteten Kochgeschirrs oder dergleichen weniger erwärmt als Griffe üblicher Bauart und Befestigungsart.

Es wird somit eine unzumutbar hohe Temperatur im Griff-bereich vermieden.

Auch bei anderen Gebrauchsgegenständen ist eine entsprechend einfache Schweißbefestigung möglich, wodurch eine einfache und sehr haltbare Befestigung des Griffs an der entsprechenden Wandung erreicht wird.

Obwohl es an sich möglich ist, beliebig geformte oder profilierte Griffe zu verwenden, sofern diese nur im Anschweißbereich mit einer gerundeten, konvexen Außenkontur versehen werden, ist bevorzugt vorgesehen, daß der Griff mindestens im Bereich der Anschweißstelle kreisrunden Querschnitt aufweist.

Weiterhin ist bevorzugt vorgesehen, daß der Griff an einem Ende (Stielgriff) oder an beiden Enden (Bügelgriff) die Anschweißstelle aufweist und daß die Anschweißstelle kuppelartig oder kugelartig gewölbt ist.

Beispielsweise kann eine derartige kuppelartige oder kugelartige Wölbung durch Kuppung des jeweiligen Endes eines stabförmig ausgebildeten Griffes gebildet werden.

Die erfingungsgemäße Ausbildung ermöglicht es im übrigen, den Griff in nahezu beliebigem Winkel relativ zur Seitenwandung oder Deckelwandung oder Zwischenelementwandung anzuordnen und dennoch eine sichere Verschweißung zu ermöglichen, da durch die Rundung der Außenkontur oder die kuppelartige oder kugelartige Wölbung eine beliebige Ausrichtung der Flächen zueinander möglich ist, solange nur die Wölbung oder Kuppung oder kugelartige Form noch die Schweißstelle bildet.

Herstellungstechnisch ist bevorzugt, daß der Griff jeweils aus einem Rundstababschnitt geformt ist.

Dabei ist besonders bevorzugt vorgesehen, daß der Griff jeweils aus einem Stababschnitt geformt ist, dessen Ende kuppelartig oder kugelartig gewölbt sind.

In Weiterbildung wird vorgeschlagen, daß der Griff aus mehreren nebeneinander angeordneten, miteinander einen Winkel anschließenden bügelartig geformten Rundstababschnitten besteht, die mit ihren kuppelartig oder kugelartig geformten Enden an der Geschirr- oder Deckelwandung oder Zwischenelementwandung angeschweißt sind und in dem der Wandung abgewandten Bereich der Bügelbiegung miteinander verschweißt sind.

Hierdurch wird eine besonders stabile Griffkonstruktion realisiert, die trotz ansprechender Form einfach zu fertigen und zu verschweißen ist.

Die Erfindung betrifft ferner einen Griff zur Befestigung an Geräteteilen, Möbelteilen, Türen, Klappen oder sonstigen Gebrauchsgegenständen, insbesondere auch nach dem Oberbegriff des Anspruchs 1, vornehmlich auch nach den Ansprüche 1 bis 6. Solche Griffe können in an sich beliebiger Weise an den entsprechenden Wandungsteilen befestigt sein, beispielsweise durch Schweißverbindung, Steckverbindung, Schraubverbindung oder sonstige geeignete Verbindungsart. Es sind diesbezüglich Griffe bekannt, die nach Art einer Reling ausgebildet sind und aus einem den eigentlichen Griffbereich bildenden vorzugsweise kreisrunden Stab bestehen, an den über den Stablängsverlauf verteilt radial bzw. orthogonal abragende Stege befestigt sind, die wiederum am Wandungsteil oder dergleichen befestigt, insbesondere angeschraubt sind.

Bei dieser Art Griffen ist der Aufwand zur Verbindung der Stege mit dem Stab erheblich, so daß die Stege häufig als hohle Rohrstücke ausgebildet werden, die entsprechend der Formung des Stabes an ihrem einen Ende geformt und ausgekehlt sind. Diese hülsenförmige Stege werden mittels Schrauben an dem entsprechenden Stab befestigt. Diese Vorgehensweise ist sehr aufwendig und kostenintensiv.

Um auch solche Grifformen in einfacher Weise herstellen zu können und eine besonders haltbare Verbindung zu schaffen, schlägt die Erfindung vor, daß der Griff aus zwei oder mehr am Wandungsteil eines Gegenstandes gemäß Oberbegriff befestigbaren, von diesem etwa radial oder orthogonal abragenden, vorzugsweise geraden ersten Stababschnitten besteht, die durch mindestens einen zweiten Stababschnitt verbunden sind, der kuppelartige oder kugelartige Enden aufweist und mit diesen Enden an Umfangsbereichen der ersten Stababschnitte angeschweißt ist.

Hierbei können die an der Wandung befestigbaren ersten Stababschnitte in herkömmlicher Weise an der Seitenwandung befestigt oder angeschweißt sein. Sie können aber auch in erfindungsgemäßer Weise an ihren Enden kuppenartig, kugelartig oder in sonstiger Form mit Wölbung versehen sein, um ein einfaches verschweißen zu ermöglichen und den Temperaturübergang zu vermindern. Durch die besondere Anordnung und Ausbildung der zweiten Stababschnitte ist es möglich, jeden Griff aus einfach zu formenden Stababschnitten zusammenzufügen, so daß mit einfachen Fertigungswerkzeugen eine Vielzahl von Grifformen und Dimensionen hergestellt werden kann. Durch die erfindungsgemäße Verschweißung und Ausbildung an den Schweißbereichen wird eine übermäßige Erwärmung zumindest der zweiten Stababschnitte unterbunden, so daß diese als eigentliche Griffelemente dienenden zweiten Stababschnitte sich bei Benutzung eines entsprechenden Kochoder Bratgeschirres weniger erwärmen als die unmittelbar an der Topfwandung befestigten ersten Stababschnitte, sofern diese herkömmlich befestigt sind.

In Weiterbildung wird hierzu vorgeschlagen, daß die Stababschnitte im Querschnitt kreisrund ausgebildet sind.

Aufgrund dieser Ausbildung kann auf relativ preiswertes entsprechend dimensioniertes Drahtmaterial als Ausgangsmaterial zur Herstellung der Griffe zurückgegriffen werden.

Ferner ist bevorzugt, daßdie an der Wandung befestigbaren ersten Stababschnitte parallel zueinander, zum freien Ende divergierend oder konvergierend gerichtet verlaufen.

Desweiteren ist bevorzugt vorgesehen, daß die zweiten Stababschnitte derart geformt und gegebenenfalls gebogen sind, daß die Enden radial an die Umfangsbereiche der ersten Stababschnitte angeschweißt sind.

Vorzugsweise sind die zweiten Stababschnitte dabei derart gebogen, daß ihr Kümmungsmittelpunkt mit dem Mittelpunkt des vornehmlich kreisunden Kochgeschirrs zusammenfällt.

Weiterhin ist bevorzugt vorgesehen, daß die ersten Stababschnitte einen größeren Querschnitt als die zweiten Stababschnitte aufweisen.

Es kann auch vorgesehen sein, daß die freien Enden der Stababschnitte ebenfalls kuppenartig oder kugelartig geformt sind, um die Verletzungsgefahr an diesen frei abragenden Enden zu vermindern und dem Griff ein ästhetisches Aussehen zu verleihen.

Insbesondere bei Stielgriffen ist bevorzugt vorgesehen, daß die an der Wandung befestigbaren Enden der ersten Stababschnitte parallel zur Wandung zum Boden des Geschirrs hin abgewinkelt sind.

Hierbei kann die Verschweißung an der Wandung in herkömmlicher Weise erfolgen oder es können auch die im Querschnitt rund ausgebildeten Enden in erfindungsgemäßer Weise mit der Topfwandung verschweißt werden.

In Weiterbildung wird zudem vorgeschlagen, daß jeweils mehrere, vorzugsweise zwei, zweite Stababschnitte parallel zueinander und mit Abstand voneinander zwischen den beiden ersten Stababschnitten eines Griffes angeschweißt sind.

Durch diese Ausbildung ist es für den Benutzer vereinfacht möglich, mit solchen Griffen ausgestattes Kochgeschirr oder dergleichen mit einer Hand an einem Griff zu erfassen, ohne daß die Gefahr besteht, daß der Topf um den zweiten Stababschnitt des Griffes in den Fingern des Benutzers verschwenkt, da die Finger des Benutzers mindestens zwei parallel zueinander verlaufende Stababschnitte als Griffelemente für eine Hand umgreifen. Die zweiten Stababschnitte sind vorzugsweise nahe der freien Enden der ersten Stababschnitte zwischen diesen angeordnet.

Eine alternative Ausführungsform besteht darin, daß der Griff aus zwei an der Wandung befestigbaren, von dieser etwa radial oder orthogonal abragenden ersten Stababschnitten besteht, die durch mindestens einen zweiten Stababschnitt verbunden sind, wobei die ersten und zweiten Stababschnitte einander kreuzen, mindestens im Kreuzungsbereich mindestens auf den aneinander anliegenden Flächenbereichen mindestens einer der Stababschnitte im Querschnitt rund oder halbrund mit zum anderen Stababschnitt weisender Rundung ausgebildet und in diesem Bereich mit dem anderen Stababschnitt verschweißt ist.

Eine weiter bevorzugte Ausführungsform wird darin gesehen, daß der Griff aus mindestens zwei an der Wandung befestigbaren von dieser radial oder orthogonal abragenden ersten Stababschnitten besteht, die vorzugsweise über ihre gesamte Länge gleichbleibenden, kreisrunden Querschnitt aufweisen und die an ihren freien Enden gekuppt bzw. halbkugelförmig ausgebildet sind, sowie mindestens einen zweiten Stababschnitt aufweist, der vorzugsweise über seine gesamte Länge gleichbleibenden, kreisrunden Querschnitt hat und gegebenenfalls an seinen Enden gekuppt bzw. halbkugelförmig ausgebildet ist, und daß die freien Enden der ersten Stababschnitte an Umfangsbereichen des zweiten Stababschnitts angeschweißt sind, so daß sich eine leiterähnliche Griffstruktur ergibt.

Ausführungsbeispiele der Erfindung sind in der Zeichnung dargestellt und im folgenden näher beschrieben.

Es zeigt:
Fig. 1 Eine erste Ausführungsform in Seitenansicht;
Fig. 2 desgleichen in Draufsicht;
Fig. 3 desgleichen in Richtung des Pfeiles 111 der Figur 1 gesehen;
Fig. 4 bis 6 eine Variante in den Ansichten gemäß Figur 1 bis 3;
Fig. 7 bis 9 eine weitere Variante in ähnlichen Ansichten wie Figur 1 bis 3 gesehen;
Fig. 10 und 11 eine weitere Variante in Seitenansicht und Draufsicht;
Fig. 12 eine weitere Variante in Draufsicht gesehen;
Fig. 13 eine Griffvariante in Draufsicht;
Fig. 14 eine Einzelheit im Schnitt XIV-XIV der Figur 13 gesehen.
Fig. 15 eine weitere Griffausbildung in Ansicht;
Fig. 16 eine Einzelheit im Schnitt gesehen.

In den Zeichnungen ist jeweils ein Koch- oder Bratgeschirr 1 teilweise mit Deckel 2 und Griffen 3 gezeigt. Bei allen Ausführungsformen besteht der Topf 1, der Deckel 2 und der Griff 3 aus Edelstahl. Zur Befestigung des Griffes 3 an der Wandung des Kochoder Bratgeschirres oder an dem entsprechenden Deckel ist der Griff 3 an der Seitenwandung des Geschirrs oder des Deckels angeschweißt.

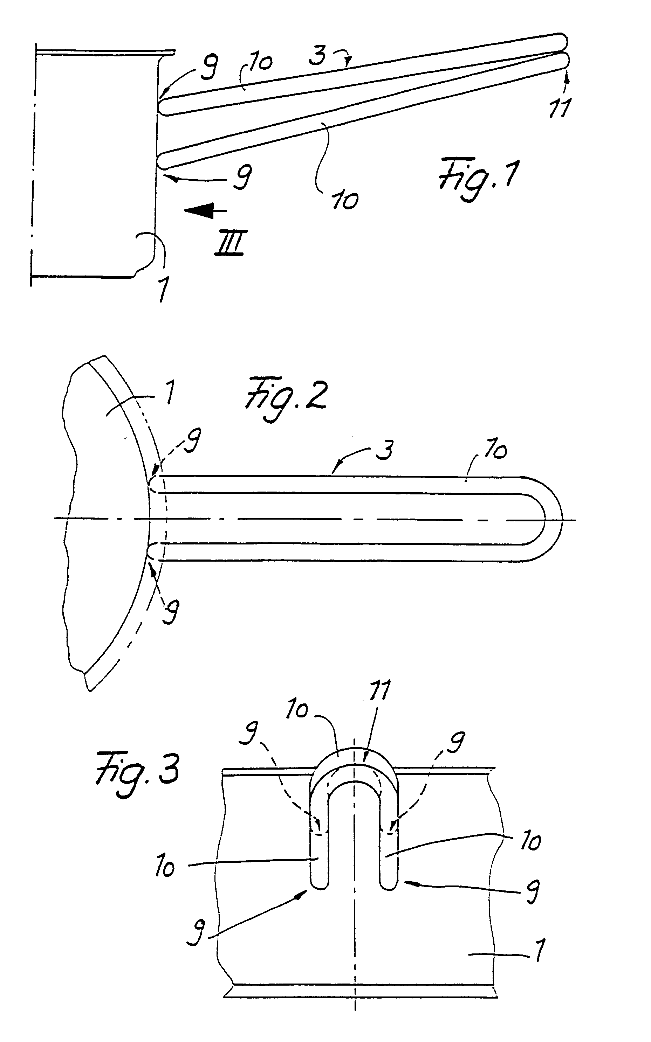

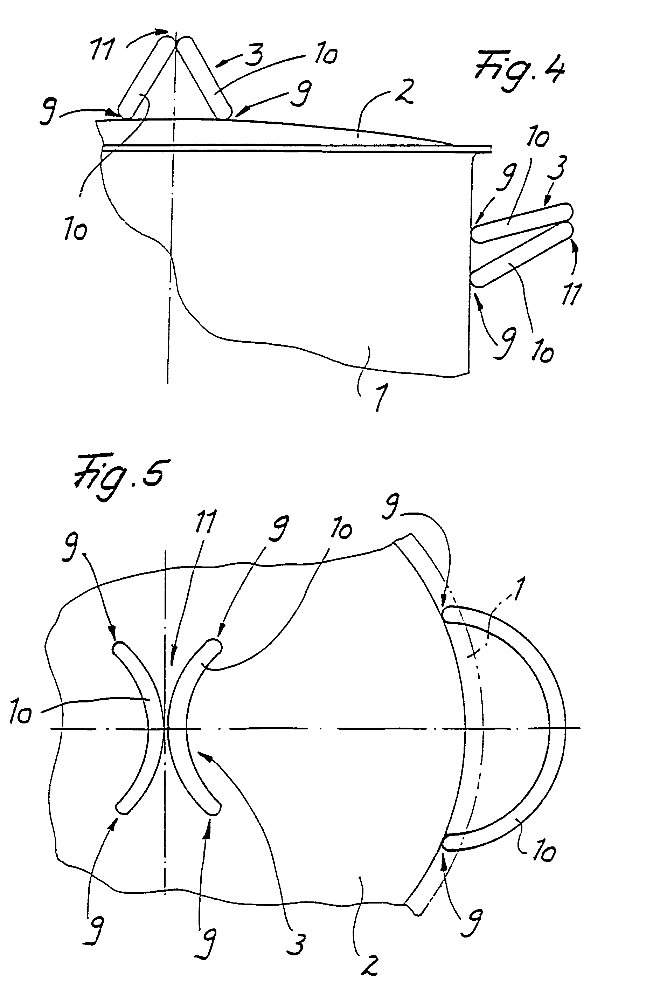

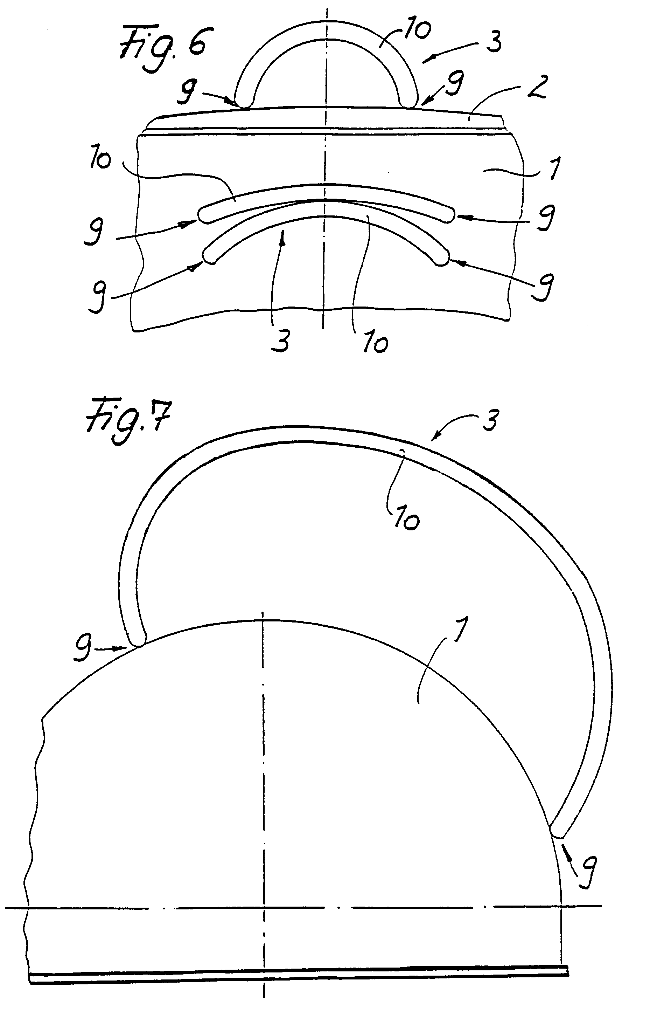

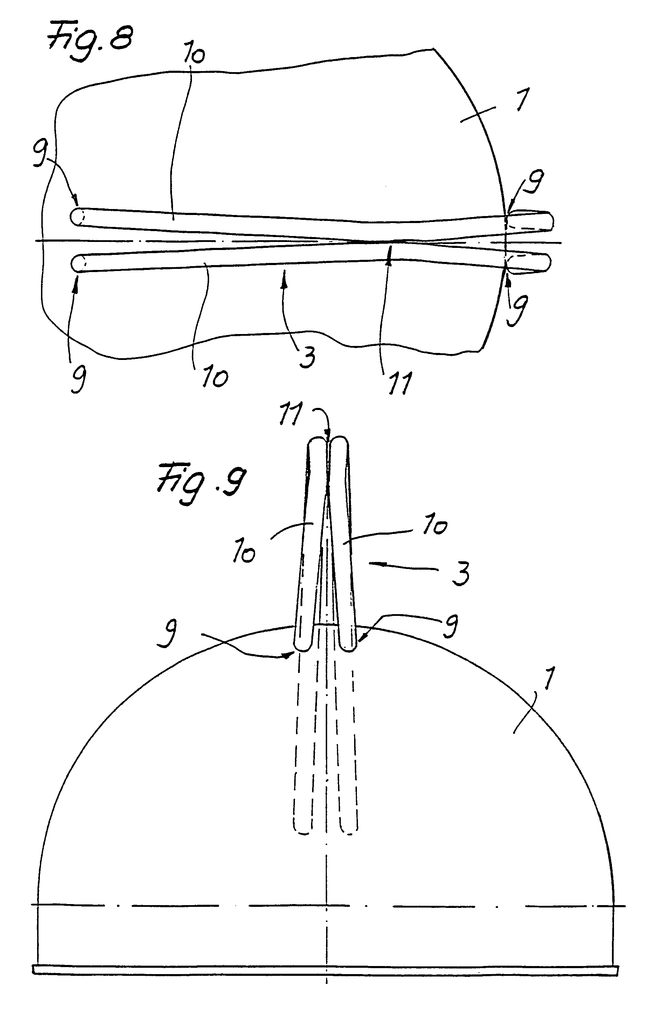

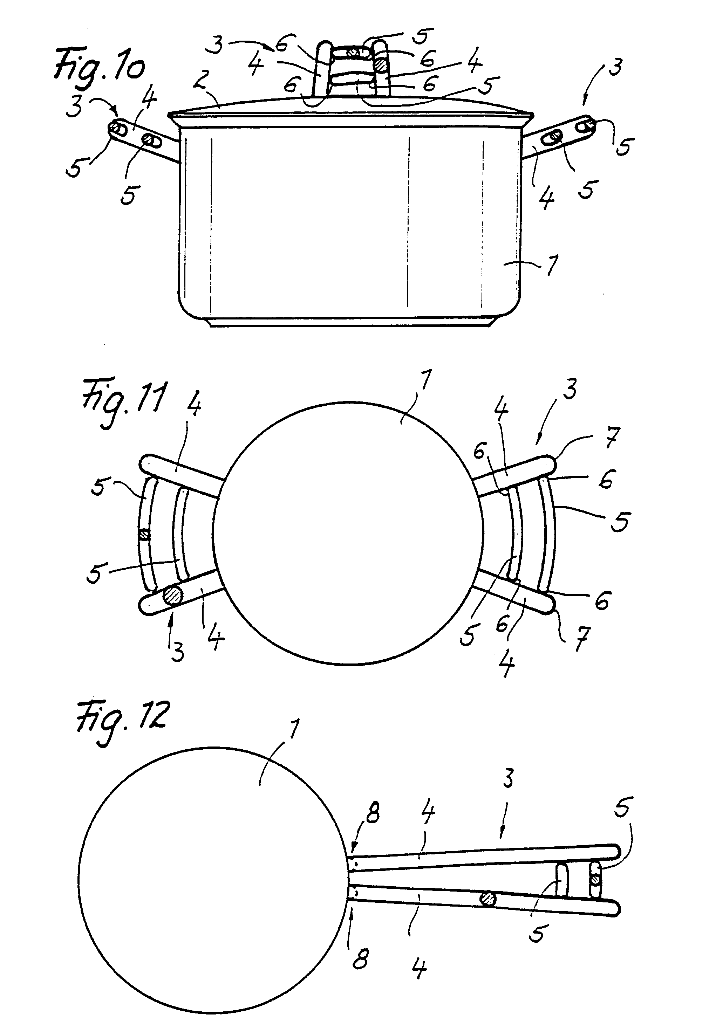

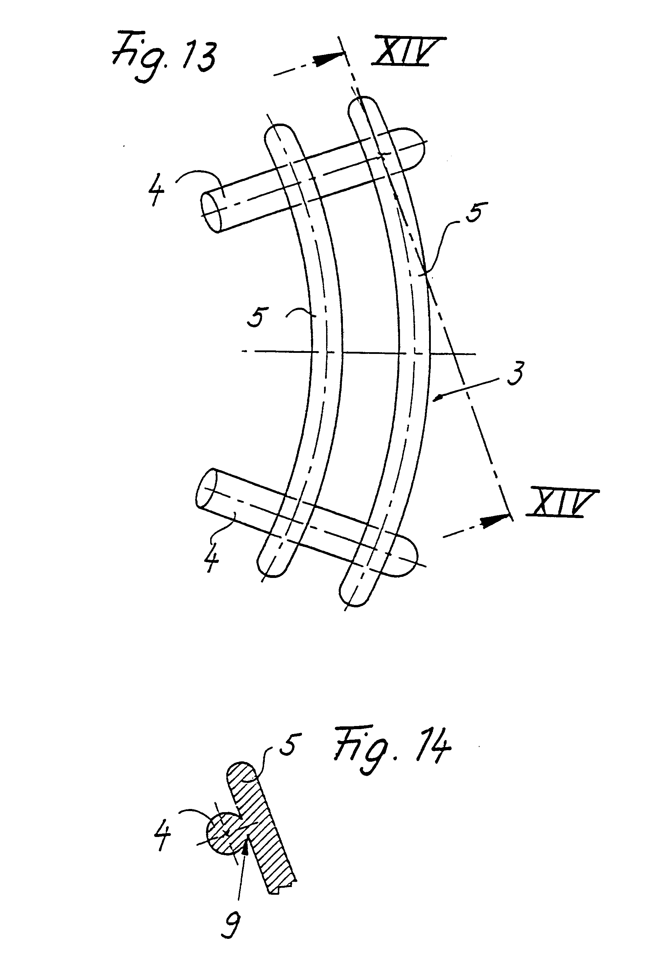

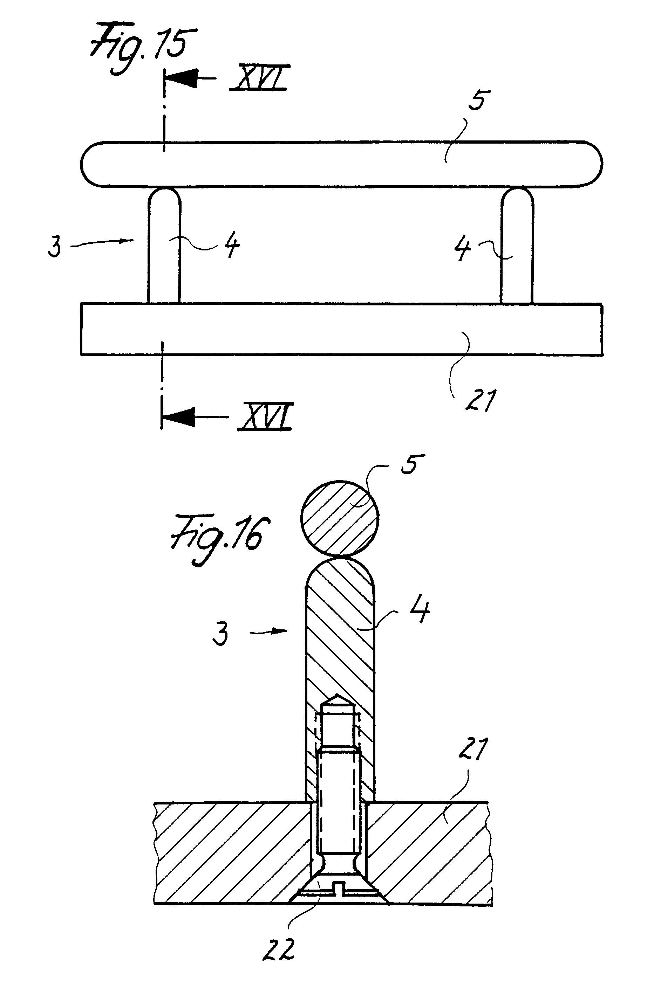

Um eine einfache Verschweißung unabhängig von der relativen Winkellage des Griffes zum Topf zu erreichen und einen geringen Wärmeübergang vom Topf 1 auf den Griff 3 zu bewirken, ist vorgesehen, daß der Griff 3 im Bereich der Anschweißstelle eine konvex gerundete Außenkontur aufweist. Der Griff ist mit der Rundung an die Wandung des Geschirrs 1 oder des Deckels 2 angelegt und im Kontaktbereich an diese angeschweißt. Bei den dargestellten Ausführungsformen weist der Griff 3, der aus Drahtabschnitten gebildet ist, jeweils kreisrunden Querschnitt auf. Bei den Ausführungsformen gemäß Figur 1 bis 9 sind die an die Geschirrwandung oder Deckelwandung angelegten Bereiche des Griffes im Bereich der Anschweißstellen jeweils kuppelartig oder kugelartig gewölbt. Wie insbesondere aus Figur 1, Figur 4 und Figur 9 ersichtlich, ist der Griff 3 aus 2 nebeneinander angeordneten, miteinander einen Winkel einschließenden, bügelartig geformten Rundstababschnitten 10 gebildet, die mit ihren kuppelartig oder kugelartig geformten Enden im Bereich der Anschweißstelle 9 an der Wandung des Geschirrs oder dergleichen angeschweißt sind. Diese Rundstababschnitte 10 sind zudem in dem der Wandung abgewandten Bereich 11 der Bügelbiegung miteinander verschweißt, wobei die Verschweißung dort ebenfalls äußerst einfach durchzuführen ist, da es sich bei den Stababschnitten um Rundstababschnitte 10 handelt.

Bei den Ausführungsformen gemäß Figur 10 bis 12 besteht jeder Griff 3 aus zwei an der Topf-oder Deckelwandung befestigten, von dieser radial abragenden ersten geraden Stababschnitten 4, die im Ausführungsbeispiel durch zwei zweite Stababschnitte 5 verbunden sind. Die Stababschnitte 5 weisen gerundete, kugelartig ausgebildete, gekuppte Enden 6 auf und sind mit den gekuppten Enden 6 an den entsprechenden Umfangsbereichen der ersten Stababschnitte 4 angeschweißt. Die Stababschnitte 4 bzw. 5 bestehen jeweils aus im Querschnitt kreisrundem Material. Wie aus der Ausführungsform gemäß Figur 11 und 12 ersichtlich, können die ersten Stababschnitte 4 so angeordnet sein, daß sie zu ihrem freien Ende hin divergierend gerichtet verlaufen. Bei der Ausbildung des Griffes am Deckel 2 können die ersten Stababschnitte beispielsweise parallel zueinander verlaufen oder auch geringfügig zueinander konvergierend gerichtet sein. Die zweiten Stababschnitte 5 sind derart gebogen, daß die gekuppten Enden 6 radial an die Umfangsbereiche der ersten Stababschnitte 4 angestoßen und angeschweißt sind. Im Regelfall weisen die ersten Stababschnitte 4 größere Querschnitte als die zweiten Stababschnitte 5 auf.

Um einen ästhetisch einwandfreien Eindruck zu erzeugen und die Verletzungsgefahr an den freien Enden der ersten Stababschnitte 4 zu unterbinden, sind auch diese Enden mit einer Kuppung 7 versehen.

Während bei der Ausführungsform nach Figur 10 und 11 die ersten Stababschnitte 4 an ihrem topfwandseitigen Ende der Topfwandung angepaßt geformt und an dieser angeschweißt sind, sind bei der Ausführungsform gemäß Figur 12 die an der Topfwandung des Topfes 1 befestigbaren Enden der ersten Stababschnitte 4 parallel zur Topfwandung zu dessen Boden hin abgewinkelt ausgebildet. Die Abwinklungen sind bei 8 ersichtlich. Diese Abwinklungen verlaufen parallel zur Topfwandung und sind an der Topfwandung angeschweißt.

Um eine hohe Griffsicherheit zu erreichen, sind bei den Ausführungsbeispielsen gemäß Figur 10 bis 12 jeweils zwei zweite Stababschnitte 5 parallel zueinander und mit Abstand voneinander zwischen den beiden ersten Stababschnitten 4 eines Griffes 3 angeschweißt, wobei die zweiten Stababschnitte 5 nahe der freien Enden der Stababschnitte 4 angeordnet sind, die der Wandung des Topfes 1 oder Deckels 2 abgewandt sind.

Bei der Ausführungsform gemäß Figur 13 und 14 besteht der Griff 3 aus zwei an der Wandung befestigbaren von dieser etwa abragenden ersten Stababschnitten 4, die durch zwei zweite Stababschnitte 5 verbunden sind. Dabei kreuzen die ersten und zweiten Stababschnitte 4, 5 einander. Im Kreuzungsbereich liegen die aneinander liegenden Flächenbereiche im Bereich ihrer Rundung aneinander an, wie insbesondere aus Figur 14 ersichtlich ist. In diesem Bereich ist die Anschweißstelle 9 gebildet.

Bei der Ausführungsform nach Figur 15 und 16 ist die Anordnung eines Griffe 3 an einer Wandung 21 eines Möbelstücks oder dergleichen gezeigt. Das Wandungsteil 21 kann eine Holzleiste oder ein ähnliches Element sein. Der Griff 3 besteht im Ausführungsbeispiel aus zwei an der Wandung (21) befestigten, von dieser orthogonal abragenden ersten Stababschnitten 4, die über ihre gesamte Länge gleichbleibenden kreisrunden Querschnitt aufweisen und die an ihren freien Enden gekuppt bzw. halbkugelförmig ausgebildet sind. Ferner besteht der Griff 3 aus einem zweiten Stababschnitt 5 in Form eines geraden Stabes kreisrunden Querschnitts, der ebenfalls an seinen Enden gekuppt bzw. halbkugelförmig ausgebildet ist. Die gekuppten freien Enden der ersten Stababschnitte 4 sind an Umfangsbereichen des zweiten Stababschnittes 5 angeschweißt, so daß sich eine leiterähnliche Griffstruktur ergibt. Die Befestigung an dem Wandungsteil 21 erfolgt mittels einer Schraube 22, die durch eine Lochung der Wandung 21 geführt und in eine Gewindeausbildung des ersten Stababschnittes 4 eingeschraubt ist.

Die Erfindung ist nicht auf die Ausführungsbeispiele beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Griff aus Edelstahl zur Schweißbefestigung an der Wandung von Koch- oder Bratgeschirren oder deren Deckeln oder anderen Gebrauchsgegenständen, die insbesondere aus Edelstahl bestehen, oder zur Schweißbefestigung an Zwischenplatten oder dergleichen Zwischenelementen aus Edelstahl, die an Koch- oder Bratgeschirren oder deren Deckeln oder anderen Gebrauchsgegenständen befestigbar sind, dadurch gekennzeichnet, daß der Griff (3) im Bereich der Anschweißstelle (9) eine gerundete Außenkontur aufweist, mit der Rundung an die Geschirrwandung, Deckelwandung, Zwischenplatten- oder Zwischenelementwandung oder Gegenstandswandung angelegt und im Kontaktbereich an diese angeschweißt ist.

2. Griff nach Anspruch 1, dadurch gekennzeichnet, daß -er Griff (3) mindestens im Bereich der Anschweißstelle (9) kreisrunden Querschnitt aufweist.

3. Griff nach Anspruch 1, dadurch gekennzeichnet, daß der Griff (3) an einem Ende (Stielgriff) oder an beiden Enden (Bügelgriff) die Anschweißstelle (9) aufweist und daß die Anschweißstelle des Griffes kuppelartig oder kugelartig gewölbt ist.

4. Griff nach einem der Ansprüche 1 bis 3, dadurch gekennzeichnet, daß der Griff (3) jeweils aus einem Rundstababschnitt (10) geformt ist.

5. Griff nach einem der Ansprüche 1 bis 4, dadurch gekennzeichnet, daß der Griff (3) jeweils aus einem Stababschnitt geformt ist, dessen Enden kuppelartig oder kugelartig gewölbt sind.

6. Griff nach einem der Ansprüche 1 bis 5, dadurch gekennzeichnet, daß der Griff (3) aus mehreren nebeneinander angeordneten, miteinander einen Winkel anschließenden bügelartig geformten Rundstababschnitt (10) besteht, die mit ihren kuppelartig oder kugelartig geformten Enden an der Geschirr- oder Dekkelwandung, Zwischenplatten- oder Zwischenelementwandung angeschweißt sind und in dem der Wandung abgewandten Bereich (11) der Bügelbiegung miteinander verschweißt sind.

7. Griff zur Befestigung an Geträteteilen, Möbelteilen, Türen, Klappen oder sonstigen Gebrauchsgegenständen, insbesondere nach dem Oberbegriff des Anspruches 1, vornehmlich auch nach einem der Ansprüche 1 bis 6, dadurch gekennzeichnet, daß der Griff (3) aus zwei oder mehr am Wandungsteil eines Gegenstandes gemäß Oberbegriff befestigbaren, von diesem etwa radial oder orthogonal abragenden, vorzugsweise geraden, ersten Stababschnitten (4) besteht, die durch mindestens einen zweiten Stababschnitt (5) verbunden sind, der kuppelartige oder kugelartige Enden (6) aufweist und mit diesen Enden an Umfangsbereichen der ersten Stababschnitte angeschweißt ist.

8. Griff nach Anspruch 7, dadurch gekennzeichnet, daß die Stababschnitte (4,5) im Querschnitt kreisrund ausgebildet sind.

9. Griff nach Anspruch 7 oder 8, dadurch gekennzeichnet, daß die am Wandungsteil befestigbaren ersten Stababschnitte (4) parallel zueinander, zum freien Ende divergierend oder konvergierend gerichtet verlaufen.

10. Griff nach einem der Ansprüche 7 bis 9, dadurch gekennzeichnet, daß die zweiten Stababschnitte (5) derart geformt und gegebenenfalls gebogen sind, daß die Enden (6) radial an die Umfangsbereiche der ersten Stababschnitte (4) angeschweißt sind.

11. Griff nach einem der Ansprüche 7 bis 10, dadurch gekennzeichnet, daß die ersten Stababschnitte (4) einen größeren Querschnitt als die zweiten Stababschnitte (5) aufweisen.

12. Griff nach einem der Ansprüche 7 bis 11, dadurch gekennzeichnet, daß die an der Wandung befestigbaren Enden der ersten Stababschnitte (4) parallel zur Wandung, insbesondere zum Boden eines Geschirrs hin, abgewinkelt sind.

13. Griff nach einem der Ansprüche 7 bis 12, dadurch gekennzeichnet, daß jeweils mehrere, vorzugsweise zwei, zweite Stababschnitte (5) parallel zueinander und mit Abstand voneinander zwischen den beiden ersten Stababschnitten (4) eines Griffes angeschweißt sind.

14. Griff nach einem der Ansprüche 1 bis 13, dadurch gekennzeichnet, daß der Griff (3) aus mindestens zwei an der Wandung befestigbaren, von dieser etwa radial oder orthogonal abragenden ersten Stababschnitten (4) besteht, die durch mindestens einen zweiten Stababschnitt (5) verbunden sind, wobei die ersten und zweiten Stababschnitte (4,5) einander kreuzen, mindestens im Kreuzungsbereich mindestens auf den aneinander anliegende Flächenbereichen mindestens einer der Stababschnitte im Querschnitt rund oder halbrund mit zum anderen Stababschnitt weisender Rundung ausgebildet und in diesem Bereich mit dem anderen Stababschnitt verschweißt ist.

15. Griff nach einem der Ansprüche 1 bis 14, dadurch gekennzeichnet, daß der Griff (3) aus mindestens zwei an der Wandung befestigbaren von dieser radial oder orthogonal abragenden ersten Stababschnitten (4) besteht, die vorzugsweise über ihre gesamte Länge gleichbleibenden, kreisrunden Querschnitt aufweisen und die an ihren freien Enden gekuppt bzw. halbkugelförmig ausgebildet sind, sowie mindestens einen zweiten Stababschnitt (5) aufweist, der vorzugsweise über seine gesamte Länge gleichbleibenden, kreisrunden Querschnitt hat und gegebenenfalls an seinen Enden gekuppt bzw. halbkugelförmig ausgebildet ist, und daß die freien Enden der ersten Stababschnitte (4) an Umfangsbereichen des zweiten Stababschnitts (5) angeschweißt sind, so daß sich eine leiterähnliche Griffstruktur ergibt.
